# EUROPEAN PATENT SPECIFICATION

(11) **EP 3 927 166 B1**
(45) Date of publication and mention of the grant of the patent: **29.07.2026**
(21) Application number: 20707028.5
(22) Date of filing: 19.02.2020
(51) Int. Cl.: A01N 43/90, A01P 7/04

(54) **USE OF SPIROPIDION**
VERWENDUNG VON SPIROPIDION
UTILISATION DE SPIROPIDIONE

(30) Priority: 20.02.2019 EP 19158282
(43) Date of publication of application: 29.12.2021
(73) Proprietor: Syngenta Crop Protection AG, 4058 Basel (CH)
(72) Inventor: SENN, Robert, 4058 Basel (CH); JOHNSON, Stephen, Bracknell Berkshire RG42 6EY (GB); DANIELS, Miriam, Bracknell Berkshire RG42 6EY (GB)
(74) Representative: SYNGENTA IP
(86) International application number: PCT/EP2020/054328
(87) International publication number: WO 2020/169651

(56) References cited:
- WO-A1-2010/066780
- WO-A1-2011/151248
- WO-A2-2011/151249

## Description

The present invention relates to the use of spiropidion as a pesticidal active ingredient via methods of application to the growth substrate of the crop of a useful plant, in particular, in agriculture or horticulture, wherein the plant is a tomato plant.

In certain circumstances, the application of pesticidal active ingredient to a plant by application to the growth substrate of the plant (such as the soil) may be preferred over foliar application, such as by conventional spraying techniques. The benefits of a targeted substrate (soil) application over a foliar application may *inter alia* be the limitation or indeed elimination of spray drift leading to the unintentional dispersal of the active ingredient in a crop field or greenhouse, thereby resulting in inefficient application and wasteage of a valuable active ingredient, as well as potential environmental contamination.

Such applications to a growth substrate, such as soil, may *inter alia* be by drip, drench or injection, all methods which are well-known to the person skilled in the art. Additionally, application may be to a hydroponic growth medium.

Tetramic acid derivatives, such as spirotetramat (known from WO 2004/007448) and spiropidion (known from WO 2010/066780), are known to be effective for the control of pests, including sucking insects such as aphids, white flies and mites. WO 2007/126691 discloses the use of spirotetramat for controlling animal pests such as insects and/or spider mites and/or nematodes by treating the soil/growth substrate by drenching or drip application or dipping or soil injection.

According to the present invention, there is provided the use of an active ingredient compound of Formula (I): 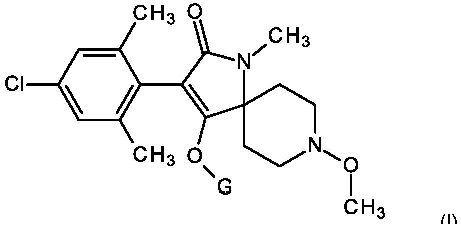 wherein G is -C(O)OC₂H₅, for controlling a pest by applying the active ingredient to the growth substrate of a crop of a useful plant, wherein the plant is a tomato plant.

Surprisingly, it has been found that the compound of formula (I) has, for practical purposes, an advantageous level of biological activity for protecting plants against pests (including sucking insects and acarines) when applied to the growth substrate (such as the soil) of a plant. This activity is enabled by the uptake from the substrate by the plant roots and vascular movement of the compound into the roots, stems and leaf foliage of the plant thereby facilitating systemic distribution of the active ingredient compound throughout the plant. Control of a pest in accordance with the present invention may be as preventative control or a curative control. By biological activity, it is meant that the compositions of the invention are capable of killing or controlling insects, retarding the growth or reproduction of insects, reducing an insect population, and/or reducing damage to plants caused by insects.

Further according to the invention, there is provided a method of controlling pests, which method comprises applying to the growth substrate of a crop of a useful plant the active ingredient compound of Formula (I) as defined according to the invention, wherein the useful plant is a tomato plant.

Methods for the synthetic preparation of spiropidion (G = -C(O)OC₂H₅, CAS no. 1229023-00-0) and its dione (G = H) are described in WO 2010/066780, WO 2018/114648 and WO 2018/114649, and references cited therein. The active dione which forms *in planta* upon application (uptake) of spiropidion may exist in different tautomeric forms as follows.

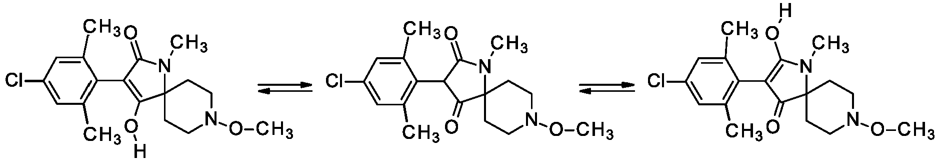

According to the invention, the growth substrate may be a soil and application may take place in a crop field or in crop plants grown in containers in a greenhouse. Application may be by drip, drenching or injection of a liquid composition comprising the active ingredient to the soil. Preferably, application is by soil drench, in particular, by directly applying the pesticidal active ingredient to an area around the base of a plant. In some embodiments, the drench application of the active ingredient may by application of a liquid composition to a lower portion of the stem or trunk of a plant, the composition filtering into the soil for uptake by the plant. Alternatively, the growth substrate may be a non-soil substrate, such as that used in a hydroponic growing system.

Typically, the active ingredient compound of Formula (I) is applied as a liquid composition further comprising one or more agrochemically-acceptable diluents or carriers. Preferably, the liquid composition is a dilution of a concentrated active ingredient composition (such as a suspension concentrate formulation) in water. The liquid composition may comprise an adjuvant (built-in or tank mixed), preferably an adjuvant selected from a mineral oil, a vegetable oil or a trans-esterified vegetable oil.

The concentration of the active ingredient compound in a composition for the use or method according to the invention may be from 10 to 80 grams of spiropidion per 100 L, preferably 20 to 60 grams of spiropidion per 100 L, and more preferably 30 to 45 grams of spiropidion per 100 L. Typical treatment rates of application per plant may be 1 to 20 mg of spiropidion, and preferably 2 to 10 mg of spiropidion per treatment. The rates of application vary within wide limits and depend on the nature of the soil, the method of application, the crop plant, the pest to be controlled, the prevailing climatic conditions, and other factors governed by the method of application, the time of application and the target crop. Single doses may be in the range of 50 to 500 g ai (spiropidion)/ha, 100 to 400 g ai/ha, or 150 to 350 g ai/ha, which may be applied as a single or dual application at an appropriate interval.

In certain embodiments of the invention, the concentration of the active ingredient compound of Formula (I) in a composition (eg, dilution in water) for the use or method may be 5 to 15 mg of spiropidion per 20 to 120 mL. In other embodiments of the invention, the concentration of the active ingredient compound of Formula (I) in a composition (eg, dilution in water) for the use or method may be 350 to 450 mg of spiropidion per 50 to 150 mL. Active ingredient dilutions at such concentrations and volumes may form a single soil application treatment dose.

Preferably, the compound of Formula (I) (ie, spriopidion) is applied in a composition as the sole pesticidal active ingredient. However, it may also be applied in combination with one or more additional pesticidal (insecticidal, acaricidal or nematicidal) active ingredients. This may include pesticidal active ingredient compositions comprising spiropidion (represented by "(I)") and another active ingredient as follows:
Compositions comprising an adjuvant include (I) + compounds selected from the group of substances consisting of petroleum oils.

Compositions comprising an acaricide include (I) + 1,1-bis(4-chlorophenyl)-2-ethoxyethanol, (I) + 2,4-dichlorophenyl benzenesulfonate, (I) + 2-fluoro-N-methyl-N-1-naphthylacetamide, (I) + 4-chlorophenyl phenyl sulfone, (I) + abamectin, (I) + acequinocyl, (I) + acetoprole, (I) + acrinathrin, (I) + aldicarb, (I) + aldoxycarb, (I) + alpha-cypermethrin, (I) + amidithion, (I) + amidoflumet, (I) + amidothioate, (I) + amiton, (I) + amiton hydrogen oxalate, (I) + amitraz, (I) + aramite, (I) + arsenous oxide, (I) + AVI 382, (I) + AZ 60541, (I) + azinphos-ethyl, (I) + azinphos-methyl, (I) + azobenzene, (I) + azocyclotin, (I) + azothoate, (I) + benomyl, (I) + benoxafos, (I) + benzoximate, (I) + benzyl benzoate, (I) + bifenazate, (I) + bifenthrin, (I) + binapacryl, (I) + brofenvalerate, (I) + bromocyclen, (I) + bromophos, (I) + bromophos-ethyl, (I) + bromopropylate, (I) + buprofezin, (I) + butocarboxim, (I) + butoxycarboxim, (I) + butylpyridaben, (I) + calcium polysulfide, (I) + camphechlor, (I) + carbanolate, (I) + carbaryl, (I) + carbofuran, (I) + carbophenothion, (I) + CGA 50'439, (I) + chinomethionat, (I) + chlorbenside, (I) + chlordimeform, (I) + chlordimeform hydrochloride, (I) + chlorfenapyr, (I) + chlorfenethol, (I) + chlorfenson, (I) + chlorfensulfide, (I) + chlorfenvinphos, (I) + chlorobenzilate, (I) + chloromebuform, (I) + chloromethiuron, (I) + chloropropylate, (I) + chlorpyrifos, (I) + chlorpyrifos-methyl, (I) + chlorthiophos, (I) + cinerin I, (I) + cinerin II, (I) + cinerins, (I) + clofentezine, (I) + closantel, (I) + coumaphos, (I) + crotamiton, (I) + crotoxyphos, (I) + cufraneb, (I) + cyanthoate, (I) + cyflumetofen, (I) + cyhalothrin, (I) + cyhexatin, (I) + cypermethrin, (I) + DCPM, (I) + DDT, (I) + demephion, (I) + demephion-O, (I) + demephion-S, (I) + demeton, (I) + demeton-methyl, (I) + demeton-O, (I) + demeton-O-methyl, (I) + demeton-S, (I) + demeton-S-methyl, (I) + demeton-S-methylsulfon, (I) + diafenthiuron, (I) + dialifos, (I) + diazinon, (I) + dichlofluanid, (I) + dichlorvos, (I) + dicliphos, (I) + dicofol, (I) + dicrotophos, (I) + dienochlor, (I) + dimefox, (I) + dimethoate, (I) + dinactin , (I) + dinex, (I) + dinex-diclexine, (I) + dinobuton, (I) + dinocap, (I) + dinocap-4, (I) + dinocap-6, (I) + dinocton, (I) + dinopenton, (I) + dinosulfon, (I) + dinoterbon, (I) + dioxathion, (I) + diphenyl sulfone, (I) + disulfiram, (I) + disulfoton, (I) + DNOC, (I) + dofenapyn, (I) + doramectin, (I) + endosulfan, (I) + endothion, (I) + EPN, (I) + eprinomectin, (I) + ethion, (I) + ethoate-methyl, (I) + etoxazole, (I) + etrimfos, (I) + fenazaflor, (I) + fenazaquin, (I) + fenbutatin oxide, (I) + fenothiocarb, (I) + fenpropathrin, (I) + fenpyrad, (I) + fenpyroximate, (I) + fenson, (I) + fentrifanil, (I) + fenvalerate, (I) + fipronil, (I) + fluacrypyrim, (I) + fluazuron, (I) + flubenzimine, (I) + flucycloxuron, (I) + flucythrinate, (I) + fluenetil, (I) + flufenoxuron, (I) + flumethrin, (I) + fluorbenside, (I) + flupentiofenox, (I) + fluvalinate, (I) + FMC 1137, (I) + formetanate, (I) + formetanate hydrochloride, (I) + formothion, (I) + formparanate, (I) + gamma-HCH, (I) + glyodin, (I) + halfenprox, (I) + heptenophos, (I) + hexadecyl cyclopropanecarboxylate, (I) + hexythiazox, (I) + iodomethane, (I) + isocarbophos, (I) + isopropyl O-(methoxyaminothiophosphoryl)salicylate, (I) + ivermectin, (I) + jasmolin I, (I) + jasmolin II, (I) + jodfenphos, (I) + lindane, (I) + lufenuron, (I) + malathion, (I) + malonoben, (I) + mecarbam, (I) + mephosfolan, (I) + mesulfen, (I) + methacrifos, (I) + methamidophos, (I) + methidathion, (I) + methiocarb, (I) + methomyl, (I) + methyl bromide, (I) + metolcarb, (I) + mevinphos, (I) + mexacarbate, (I) + milbemectin, (I) + milbemycin oxime, (I) + mipafox, (I) + monocrotophos, (I) + morphothion, (I) + moxidectin, (I) + naled, (I) + NC-184, (I) + NC-512, (I) + nifluridide, (I) + nikkomycins, (I) + nitrilacarb, (I) + nitrilacarb 1:1 zinc chloride complex, (I) + NNI-0101, (I) + NNI-0250, (I) + omethoate, (I) + oxamyl, (I) + oxydeprofos, (I) + oxydisulfoton, (I) + pp'-DDT, (I) + parathion, (I) + permethrin, (I) + petroleum oils, (I) + phenkapton, (I) + phenthoate, (I) + phorate, (I) + phosalone, (I) + phosfolan, (I) + phosmet, (I) + phosphamidon, (I) + phoxim, (I) + pirimiphos-methyl, (I) + polychloroterpenes, (I) + polynactins, (I) + proclonol, (I) + profenofos, (I) + promacyl, (I) + propargite, (I) + propetamphos, (I) + propoxur, (I) + prothidathion, (I) + prothoate, (I) + pyrethrin I, (I) + pyrethrin II, (I) + pyrethrins, (I) + pyridaben, (I) + pyridaphenthion, (I) + pyrimidifen, (I) + pyrimitate, (I) + quinalphos, (I) + quintiofos, (I) + R-1492, (I) + RA-17, (I) + rotenone, (I) + schradan, (I) + sebufos, (I) + selamectin, (I) + SI-0009, (I) + sophamide, (I) + spirodiclofen, (I) + spiromesifen, (I) + SSI-121, (I) + sulfiram, (I) + sulfluramid, (I) + sulfotep, (I) + sulfur, (I) + SZI-121, (I) + tau-fluvalinate, (I) + tebufenpyrad, (I) + TEPP, (I) + terbam, (I) + tetrachlorvinphos, (I) + tetradifon, (I) + tetranactin, (I) + tetrasul, (I) + thiafenox, (I) + thiocarboxime, (I) + thiofanox, (I) + thiometon, (I) + thioquinox, (I) + thuringiensin, (I) + triamiphos, (I) + triarathene, (I) + triazophos, (I) + triazuron, (I) + trichlorfon, (I) + trifenofos, (I) + trinactin, (I) + vamidothion, (I) + vaniliprole and (I) + YI-5302.

Compositions comprising an anthelmintic include (I) + abamectin, (I) + crufomate, (I) + doramectin, (I) + emamectin, (I) + emamectin benzoate, (I) + eprinomectin, (I) + ivermectin, (I) + milbemycin oxime, (I) + moxidectin, (I) + piperazine, (I) + selamectin, (I) + spinosad and (I) + thiophanate.

Compositions comprising an avicide include (I) + chloralose, (I) + endrin, (I) + fenthion, (I) + pyridin-4-amine and (I) + strychnine.

Compositions comprising a biological control agent include (I) + Adoxophyes orana GV, (I) + Agrobacterium radiobacter, (I) + Amblyseius spp., (I) + Anagrapha falcifera NPV, (I) + Anagrus atomus, (I) + Aphelinus abdominalis, (I) + Aphidius colemani, (I) + Aphidoletes aphidimyza, (I) + Autographa californica NPV, (I) + Bacillus firmus, (I) + Bacillus sphaericus Neide, (I) + Bacillus thuringiensis Berliner, (I) + Bacillus thuringiensis subsp. aizawai, (I) + Bacillus thuringiensis subsp. israelensis, (I) + Bacillus thuringiensis subsp. japonensis, (I) + Bacillus thuringiensis subsp. kurstaki, (I) + Bacillus thuringiensis subsp. tenebrionis, (I) + Beauveria bassiana, (I) + Beauveria brongniartii, (I) + Chrysoperla carnea, (I) + Cryptolaemus montrouzieri, (I) + Cydia pomonella GV, (I) + Dacnusa sibirica, (I) + Diglyphus isaea, (I) + Encarsia formosa, (I) + Eretmocerus eremicus, (I) + Helicoverpa zea NPV, (I) + Heterorhabditis bacteriophora and H. megidis, (I) + Hippodamia convergens, (I) + Leptomastix dactylopii, (I) + Macrolophus caliginosus, (I) + Mamestra brassicae NPV, (I) + Metaphycus helvolus, (I) + Metarhizium anisopliae var. acridum, (I) + Metarhizium anisopliae var. anisopliae, (I) + Neodiprion sertifer NPV and N. lecontei NPV, (I) + Orius spp., (I) + Paecilomyces fumosoroseus, (I) + Phytoseiulus persimilis, (I) + Spodoptera exigua multicapsid nuclear polyhedrosis virus, (I) + Steinernema bibionis, (I) + Steinernema carpocapsae, (I) + Steinernema feltiae, (I) + Steinernema glaseri, (I) + Steinernema riobrave, (I) + Steinernema riobravis, (I) + Steinernema scapterisci, (I) + Steinernema spp., (I) + Trichogramma spp., (I) + Typhlodromus occidentalis and (I) + Verticillium lecanii.

Compositions comprising a soil sterilant include (I) + iodomethane and methyl bromide.

Compositions comprising a chemosterilant include (I) + apholate, (I) + bisazir, (I) + busulfan, (I) + diflubenzuron, (I) + dimatif, (I) + hemel, (I) + hempa, (I) + metepa, (I) + methiotepa, (I) + methyl apholate, (I) + morzid, (I) + penfluron, (I) + tepa, (I) + thiohempa, (I) + thiotepa, (I) + tretamine and (I) + uredepa.

Compositions comprising an insect pheromone include (I) + (E)-dec-5-en-1-yl acetate with (E)-dec-5-en-1-ol, (I) + (E)-tridec-4-en-1-yl acetate, (I) + (E)-6-methylhept-2-en-4-ol, (I) + (E,Z)-tetradeca-4,10-dien-1-yl acetate, (I) + (Z)-dodec-7-en-1-yl acetate, (I) + (Z)-hexadec-11-enal, (I) + (Z)-hexadec-11-en-1-yl acetate, (I) + (Z)-hexadec-13-en-11-yn-1-yl acetate, (I) + (Z)-icos-13-en-10-one, (I) + (Z)-tetradec-7-en-1-al, (I) + (Z)-tetradec-9-en-1-ol, (I) + (Z)-tetradec-9-en-1-yl acetate, (I) + (7E,9Z)-dodeca-7,9-dien-1-yl acetate, (I) + (9Z,11E)-tetradeca-9,11-dien-1-yl acetate, (I) + (9Z,12E)-tetradeca-9,12-dien-1-yl acetate, (I) + 14-methyloctadec-1-ene, (I) + 4-methylnonan-5-ol with 4-methylnonan-5-one, (I) + alpha-multistriatin, (I) + brevicomin, (I) + codlelure, (I) + codlemone, (I) + cuelure, (I) + disparlure, (I) + dodec-8-en-1-yl acetate, (I) + dodec-9-en-1-yl acetate, (I) + dodeca-8, (I) + 10-dien-1-yl acetate, (I) + dominicalure, (I) + ethyl 4-methyloctanoate, (I) + eugenol, (I) + frontalin, (I) + gossyplure, (I) + grandlure, (I) + grandlure I, (I) + grandlure II, (I) + grandlure III, (I) + grandlure IV, (I) + hexalure, (I) + ipsdienol, (I) + ipsenol, (I) + japonilure, (I) + lineatin, (I) + litlure, (I) + looplure, (I) + medlure, (I) + megatomoic acid, (I) + methyl eugenol, (I) + muscalure, (I) + octadeca-2,13-dien-1-yl acetate, (I) + octadeca-3,13-dien-1-yl acetate, (I) + orfralure, (I) + oryctalure, (I) + ostramone, (I) + siglure, (I) + sordidin, (I) + sulcatol, (I) + tetradec-11-en-1-yl acetate, (I) + trimedlure, (I) + trimedlure A, (I) + trimedlure B1, (I) + trimedlure B2, (I) + trimedlure C and (I) + trunc-call.

Compositions comprising an insect repellent include (I) + 2-(octylthio)ethanol, (I) + butopyronoxyl, (I) + butoxy(polypropylene glycol), (I) + dibutyl adipate, (I) + dibutyl phthalate, (I) + dibutyl succinate, (I) + diethyltoluamide, (I) + dimethyl carbate, (I) + dimethyl phthalate, (I) + ethyl hexanediol, (I) + hexamide, (I) + methoquin-butyl, (I) + methylneodecanamide, (I) + oxamate and (I) + picaridin.

Compositions comprising an insecticide include (I) + 1-dichloro-1-nitroethane, (I) + 1,1-dichloro-2,2-bis(4-ethylphenyl)ethane , (I) +, (I) + 1,2-dichloropropane, (I) + 1,2-dichloropropane with 1,3-dichloropropene, (I) + 1-bromo-2-chloroethane, (I) + 2,2,2-trichloro-1-(3,4-dichlorophenyl)ethyl acetate, (I) + 2,2-dichlorovinyl 2-ethylsulfinylethyl methyl phosphate, (I) + 2-(1,3-dithiolan-2-yl)phenyl dimethylcarbamate, (I) + 2-(2-butoxyethoxy)ethyl thiocyanate, (I) + 2-(4,5-dimethyl-1,3-dioxolan-2-yl)phenyl methylcarbamate, (I) + 2-(4-chloro-3,5-xylyloxy)ethanol, (I) + 2-chlorovinyl diethyl phosphate, (I) + 2-imidazolidone, (I) + 2-isovalerylindan-1,3-dione, (I) + 2-methyl(prop-2-ynyl)aminophenyl methylcarbamate, (I) + 2-thiocyanatoethyl laurate, (I) + 3-bromo-1-chloroprop-1-ene, (I) + 3-methyl-1-phenylpyrazol-5-yl dimethylcarbamate, (I) + 4-methyl(prop-2-ynyl)amino-3,5-xylyl methylcarbamate, (I) + 5,5-dimethyl-3-oxocyclohex-1-enyl dimethylcarbamate, (I) + abamectin, (I) + acephate, (I) + acetamiprid, (I) + acethion, (I) + acetoprole, (I) + acrinathrin, (I) + acrylonitrile, (I) + alanycarb, (I) + aldicarb, (I) + aldoxycarb, (I) + aldrin, (I) + allethrin, (I) + allosamidin, (I) + allyxycarb, (I) + alpha-cypermethrin, (I) + alpha-ecdysone, (I) + aluminium phosphide, (I) + amidithion, (I) + amidothioate, (I) + aminocarb, (I) + amiton, (I) + amiton hydrogen oxalate, (I) + amitraz, (I) + anabasine, (I) + athidathion, (I) + AVI 382, (I) + AZ 60541, (I) + azadirachtin, (I) + azamethiphos, (I) + azinphos-ethyl, (I) + azinphos-methyl, (I) + azothoate, (I) + Bacillus thuringiensis delta endotoxins, (I) + barium hexafluorosilicate, (I) + barium polysulfide, (I) + barthrin, (I) + Bayer 22/190, (I) + Bayer 22408, (I) + bendiocarb, (I) + benfuracarb, (I) + bensultap, (I) + beta-cyfluthrin, (I) + beta-cypermethrin, (I) + bifenthrin, (I) + bioallethrin, (I) + bioallethrin S-cyclopentenyl isomer, (I) + bioethanomethrin, (I) + biopermethrin, (I) + bioresmethrin, (I) + bis(2-chloroethyl) ether, (I) + bistrifluron, (I) + borax, (I) + brofenvalerate, (I) + bromfenvinfos, (I) + bromocyclen, (I) + bromo-DDT, (I) + bromophos, (I) + bromophos-ethyl, (I) + bufencarb, (I) + buprofezin, (I) + butacarb, (I) + butathiofos, (I) + butocarboxim, (I) + butonate, (I) + butoxycarboxim, (I) + butylpyridaben, (I) + cadusafos, (I) + calcium arsenate, (I) + calcium cyanide, (I) + calcium polysulfide, (I) + camphechlor, (I) + carbanolate, (I) + carbaryl, (I) + carbofuran, (I) + carbon disulfide, (I) + carbon tetrachloride, (I) + carbophenothion, (I) + carbosulfan, (I) + cartap, (I) + cartap hydrochloride, (I) + cevadine, (I) + chlorbicyclen, (I) + chlordane, (I) + chlordecone, (I) + chlordimeform, (I) + chlordimeform hydrochloride, (I) + chlorethoxyfos, (I) + chlorfenapyr, (I) + chlorfenvinphos, (I) + chlorfluazuron, (I) + chlormephos, (I) + chloroform, (I) + chloropicrin, (I) + chlorphoxim, (I) + chlorprazophos, (I) + chlorpyrifos, (I) + chlorpyrifos-methyl, (I) + chlorthiophos, (I) + chromafenozide, (I) + cinerin I, (I) + cinerin II, (I) + cinerins, (I) + cis-resmethrin, (I) + cismethrin, (I) + clocythrin, (I) + cloethocarb, (I) + closantel, (I) + clothianidin, (I) + copper acetoarsenite, (I) + copper arsenate, (I) + copper oleate, (I) + coumaphos, (I) + coumithoate, (I) + crotamiton, (I) + crotoxyphos, (I) + crufomate, (I) + cryolite, (I) + CS 708, (I) + cyanofenphos, (I) + cyanophos, (I) + cyanthoate, (I) + cyclethrin, (I) + cycloprothrin, (I) + cyfluthrin, (I) + cyhalothrin, (I) + cypermethrin, (I) + cyphenothrin, (I) + cyromazine, (I) + cythioate, (I) + d-limonene, (I) + d-tetramethrin, (I) + DAEP, (I) + dazomet, (I) + DDT, (I) + decarbofuran, (I) + deltamethrin, (I) + demephion, (I) + demephion-O, (I) + demephion-S, (I) + demeton, (I) + demeton-methyl, (I) + demeton-O, (I) + demeton-O-methyl, (I) + demeton-S, (I) + demeton-S-methyl, (I) + demeton-S-methylsulphon, (I) + diafenthiuron, (I) + dialifos, (I) + diamidafos, (I) + diazinon, (I) + dicapthon, (I) + dichlofenthion, (I) + dichlorvos, (I) + dicliphos, (I) + dicresyl, (I) + dicrotophos, (I) + dicyclanil, (I) + dieldrin, (I) + diethyl 5-methylpyrazol-3-yl phosphate, (I) + diflubenzuron, (I) + dilor, (I) + dimefluthrin, (I) + dimefox, (I) + dimetan, (I) + dimethoate, (I) + dimethrin, (I) + dimethylvinphos, (I) + dimetilan, (I) + dinex, (I) + dinex-diclexine, (I) + dinoprop, (I) + dinosam, (I) + dinoseb, (I) + dinotefuran, (I) + diofenolan, (I) + dioxabenzofos, (I) + dioxacarb, (I) + dioxathion, (I) + disulfoton, (I) + dithicrofos, (I) + DNOC, (I) + doramectin, (I) + DSP, (I) + ecdysterone, (I) + EI 1642, (I) + emamectin, (I) + emamectin benzoate, (I) + EMPC, (I) + empenthrin, (I) + endosulfan, (I) + endothion, (I) + endrin, (I) + EPBP, (I) + EPN, (I) + epofenonane, (I) + eprinomectin, (I) + esfenvalerate, (I) + etaphos, (I) + ethiofencarb, (I) + ethion, (I) + ethiprole, (I) + ethoate-methyl, (I) + ethoprophos, (I) + ethyl formate, (I) + ethyl-DDD, (I) + ethylene dibromide, (I) + ethylene dichloride, (I) + ethylene oxide, (I) + etofenprox, (I) + etrimfos, (I) + EXD, (I) + famphur, (I) + fenamiphos, (I) + fenazaflor, (I) + fenchlorphos, (I) + fenethacarb, (I) + fenfluthrin, (I) + fenitrothion, (I) + fenobucarb, (I) + fenoxacrim, (I) + fenoxycarb, (I) + fenpirithrin, (I) + fenpropathrin, (I) + fenpyrad, (I) + fensulfothion, (I) + fenthion, (I) + fenthion-ethyl, (I) + fenvalerate, (I) + fipronil, (I) + flonicamid, (I) + flubendiamide, (I) + flucofuron, (I) + flucycloxuron, (I) + flucythrinate, (I) + fluenetil, (I) + flufenerim, (I) + flufenoxuron, (I) + flufenprox, (I) + flumethrin, (I) + fluvalinate, (I) + FMC 1137, (I) + fonofos, (I) + formetanate, (I) + formetanate hydrochloride, (I) + formothion, (I) + formparanate, (I) + fosmethilan, (I) + fospirate, (I) + fosthiazate, (I) + fosthietan, (I) + furathiocarb, (I) + furethrin, (I) + gamma-cyhalothrin, (I) + gamma-HCH, (I) + guazatine, (I) + guazatine acetates, (I) + GY-81, (I) + halfenprox, (I) + halofenozide, (I) + HCH, (I) + HEOD, (I) + heptachlor, (I) + heptenophos, (I) + heterophos, (I) + hexaflumuron, (I) + HHDN, (I) + hydramethylnon, (I) + hydrogen cyanide, (I) + hydroprene, (I) + hyquincarb, (I) + imidacloprid, (I) + imiprothrin, (I) + indoxacarb, (I) + iodomethane, (I) + IPSP, (I) + isazofos, (I) + isobenzan, (I) + isocarbophos, (I) + isocycloseram, (I) + isodrin, (I) + isofenphos, (I) + isolane, (I) + isoprocarb, (I) + isopropyl O-(methoxyaminothiophosphoryl)salicylate, (I) + isoprothiolane, (I) + isothioate, (I) + isoxathion, (I) + ivermectin, (I) + jasmolin I, (I) + jasmolin II, (I) + jodfenphos, (I) + juvenile hormone I, (I) + juvenile hormone II, (I) + juvenile hormone III, (I) + kelevan, (I) + kinoprene, (I) + lambda-cyhalothrin, (I) + lead arsenate, (I) + lepimectin, (I) + leptophos, (I) + lindane, (I) + lirimfos, (I) + lufenuron, (I) + lythidathion, (I) + m-cumenyl methylcarbamate, (I) + magnesium phosphide, (I) + malathion, (I) + malonoben, (I) + mazidox, (I) + mecarbam, (I) + mecarphon, (I) + menazon, (I) + mephosfolan, (I) + mercurous chloride, (I) + mesulfenfos, (I) + metaflumizone, (I) + metam, (I) + metam-potassium, (I) + metam-sodium, (I) + methacrifos, (I) + methamidophos, (I) + methanesulfonyl fluoride, (I) + methidathion, (I) + methiocarb, (I) + methocrotophos, (I) + methomyl, (I) + methoprene, (I) + methoquin-butyl, (I) + methothrin, (I) + methoxychlor, (I) + methoxyfenozide, (I) + methyl bromide, (I) + methyl isothiocyanate, (I) + methylchloroform, (I) + methylene chloride, (I) + metofluthrin, (I) + metolcarb, (I) + metoxadiazone, (I) + mevinphos, (I) + mexacarbate, (I) + milbemectin, (I) + milbemycin oxime, (I) + mipafox, (I) + mirex, (I) + monocrotophos, (I) + morphothion, (I) + moxidectin, (I) + naftalofos, (I) + naled, (I) + naphthalene, (I) + NC-170, (I) + NC-184, (I) + nicotine, (I) + nicotine sulfate, (I) + nifluridide, (I) + nitenpyram, (I) + nithiazine, (I) + nitrilacarb, (I) + nitrilacarb 1:1 zinc chloride complex, (I) + NNI-0101, (I) + NNI-0250, (I) + nornicotine, (I) + novaluron, (I) + noviflumuron, (I) + O-5-dichloro-4-iodophenyl O-ethyl ethylphosphonothioate, (I) + O,O-diethyl O-4-methyl-2-oxo-2H-chromen-7-yl phosphorothioate, (I) + O,O-diethyl O-6-methyl-2-propylpyrimidin-4-yl phosphorothioate, (I) + O,O,O',O'-tetrapropyl dithiopyrophosphate, (I) + oleic acid, (I) + omethoate, (I) + oxamyl, (I) + oxydemeton-methyl, (I) + oxydeprofos, (I) + oxydisulfoton, (I) + pp'-DDT, (I) + para-dichlorobenzene, (I) + parathion, (I) + parathion-methyl, (I) + penfluron, (I) + pentachlorophenol, (I) + pentachlorophenyl laurate, (I) + permethrin, (I) + petroleum oils, (I) + PH 60-38, (I) + phenkapton, (I) + phenothrin, (I) + phenthoate, (I) + phorate+ TX, (I) + phosalone, (I) + phosfolan, (I) + phosmet, (I) + phosnichlor, (I) + phosphamidon, (I) + phosphine, (I) + phoxim, (I) + phoxim-methyl, (I) + pirimetaphos, (I) + pirimicarb, (I) + pirimiphos-ethyl, (I) + pirimiphos-methyl, (I) + polychlorodicyclopentadiene isomers, (I) + polychloroterpenes, (I) + potassium arsenite, (I) + potassium thiocyanate, (I) + prallethrin, (I) + precocene I, (I) + precocene II, (I) + precocene III, (I) + primidophos, (I) + profenofos, (I) + profluthrin, (I) + promacyl, (I) + promecarb, (I) + propaphos, (I) + propetamphos, (I) + propoxur, (I) + prothidathion, (I) + prothiofos, (I) + prothoate, (I) + protrifenbute, (I) + pymetrozine, (I) + pyraclofos, (I) + pyrazophos, (I) + pyresmethrin, (I) + pyrethrin I, (I) + pyrethrin II, (I) + pyrethrins, (I) + pyridaben, (I) + pyridalyl, (I) + pyridaphenthion, (I) + pyrimidifen, (I) + pyrimitate, (I) + pyriproxyfen, (I) + quassia, (I) + quinalphos, (I) + quinalphos-methyl, (I) + quinothion, (I) + quintiofos, (I) + R-1492, (I) + rafoxanide, (I) + resmethrin, (I) + rotenone, (I) + RU 15525, (I) + RU 25475, (I) + ryania, (I) + ryanodine, (I) + sabadilla, (I) + schradan, (I) + sebufos, (I) + selamectin, (I) + SI-0009, (I) + SI-0205, (I) + SI-0404, (I) + SI-0405, (I) + silafluofen, (I) + SN 72129, (I) + sodium arsenite, (I) + sodium cyanide, (I) + sodium fluoride, (I) + sodium hexafluorosilicate, (I) + sodium pentachlorophenoxide, (I) + sodium selenate, (I) + sodium thiocyanate, (I) + sophamide, (I) + spinosad, (I) + spiromesifen, (I) + spirotetrmat, (I) + sulcofuron, (I) + sulcofuron-sodium, (I) + sulfluramid, (I) + sulfotep, (I) + sulfuryl fluoride, (I) + sulprofos, (I) + tar oils, (I) + tau-fluvalinate, (I) + tazimcarb, (I) + TDE, (I) + tebufenozide, (I) + tebufenpyrad, (I) + tebupirimfos, (I) + teflubenzuron, (I) + tefluthrin, (I) + temephos, (I) + TEPP, (I) + terallethrin, (I) + terbam, (I) + terbufos, (I) + tetrachloroethane, (I) + tetrachlorvinphos, (I) + tetramethrin, (I) + theta-cypermethrin, (I) + thiacloprid, (I) + thiafenox, (I) + thiamethoxam, (I) + thicrofos, (I) + thiocarboxime, (I) + thiocyclam, (I) + thiocyclam hydrogen oxalate, (I) + thiodicarb, (I) + thiofanox, (I) + thiometon, (I) + thionazin, (I) + thiosultap, (I) + thiosultap-sodium, (I) + thuringiensin, (I) + tolfenpyrad, (I) + tralomethrin, (I) + transfluthrin, (I) + transpermethrin, (I) + triamiphos, (I) + triazamate, (I) + triazophos, (I) + triazuron, (I) + trichlorfon, (I) + trichlormetaphos-3, (I) + trichloronat, (I) + trifenofos, (I) + triflumuron, (I) + trimethacarb, (I) + triprene, (I) + vamidothion, (I) + vaniliprole, (I) + veratridine, (I) + veratrine, (I) + XMC, (I) + xylylcarb, (I) + YI-5302, (I) + zeta-cypermethrin, (I) + zetamethrin, (I) + zinc phosphide, (I) + zolaprofos and ZXI 8901, (I) + cyantraniliprole, (I) + chlorantraniliprole, (I) + cyenopyrafen, (I) + cyflumetofen, (I) + pyrifluquinazon, (I) + spinetoram, (I) + spirotetramat, (I) + sulfoxaflor, (I) + flufiprole, (I) + meperfluthrin, (I) + tetramethylfluthrin, (I) + triflumezopyrim.

Compositions comprising a molluscicide include (I) + bis(tributyltin) oxide, (I) + bromoacetamide, (I) + calcium arsenate, (I) + cloethocarb, (I) + copper acetoarsenite, (I) + copper sulfate, (I) + fentin, (I) + ferric phosphate, (I) + metaldehyde, (I) + methiocarb, (I) + niclosamide, (I) + niclosamide-olamine, (I) + pentachlorophenol, (I) + sodium pentachlorophenoxide, (I) + tazimcarb, (I) + thiodicarb, (I) + tributyltin oxide, (I) + trifenmorph, (I) + trimethacarb, (I) + triphenyltin acetate and triphenyltin hydroxide, (I) + pyriprole.

Compositions comprising a nematicide include I+ AKD-3088, (I) + 1,2-dibromo-3-chloropropane, (I) + 1,2-dichloropropane, (I) + 1,2-dichloropropane with 1,3-dichloropropene, (I) + 1,3-dichloropropene, (I) + 3,4-dichlorotetrahydrothiophene 1,1-dioxide, (I) + 3-(4-chlorophenyl)-5-methylrhodanine, (I) + 5-methyl-6-thioxo-1,3,5-thiadiazinan-3-ylacetic acid, (I) + 6-isopentenylaminopurine, (I) + abamectin, (I) + acetoprole, (I) + alanycarb, (I) + aldicarb, (I) + aldoxycarb, (I) + AZ 60541, (I) + benclothiaz, (I) + benomyl, (I) + butylpyridaben, (I) + cadusafos, (I) + carbofuran, (I) + carbon disulfide, (I) + carbosulfan, (I) + chloropicrin, (I) + chlorpyrifos, (I) + cloethocarb, (I) + cyclobutrifluram, (I) + cytokinins, (I) + dazomet, (I) + DBCP, (I) + DCIP, (I) + diamidafos, (I) + dichlofenthion, (I) + dicliphos, (I) + dimethoate, (I) + doramectin, (I) + emamectin, (I) + emamectin benzoate, (I) + eprinomectin, (I) + ethoprophos, (I) + ethylene dibromide, (I) + fenamiphos, (I) + fenpyrad, (I) + fensulfothion, (I) + fosthiazate, (I) + fosthietan, (I) + furfural, (I) + GY-81, (I) + heterophos, (I) + iodomethane, (I) + isamidofos, (I) + isazofos, (I) + ivermectin, (I) + kinetin, (I) + mecarphon, (I) + metam, (I) + metam-potassium, (I) + metam-sodium, (I) + methyl bromide, (I) + methyl isothiocyanate, (I) + milbemycin oxime, (I) + moxidectin, (I) + Myrothecium verrucaria composition, (I) + NC-184, (I) + oxamyl, (I) + phorate, (I) + phosphamidon, (I) + phosphocarb, (I) + sebufos, (I) + selamectin, (I) + spinosad, (I) + terbam, (I) + terbufos, (I) + tetrachlorothiophene, (I) + thiafenox, (I) + thionazin, (I) + triazophos, (I) + triazuron, (I) + xylenols, (I) + YI-5302 and zeatin, (I) + fluensulfone.

Compositions comprising a synergist include (I) + 2-(2-butoxyethoxy)ethyl piperonylate, (I) + 5-(1,3-benzodioxol-5-yl)-3-hexylcyclohex-2-enone, (I) + farnesol with nerolidol, (I) + MB-599, (I) + MGK 264, (I) + piperonyl butoxide, (I) + piprotal, (I) + propyl isomer, (I) + S421, (I) + sesamex, (I) + sesasmolin and (I) + sulfoxide.

Compositions comprising an animal repellent include I+ anthraquinone, (I) + chloralose, (I) + copper naphthenate, (I) + copper oxychloride, (I) + diazinon, (I) + dicyclopentadiene, (I) + guazatine, (I) + guazatine acetates, (I) + methiocarb, (I) + pyridin-4-amine, (I) + thiram, (I) + trimethacarb, (I) + zinc naphthenate and (I) + ziram.

Further compositions include (I) + brofluthrinate, (I) + cycloxaprid, (I) + diflovidazine, (I) + flometoquin, (I) + fluhexafon, (I) + Guadipyr, (I) + Plutella xylostella Granulosis virus, (I) + Cydia pomonella Granulosis virus, (I) + harpin, (I) + imicyafos, (I) + Heliothis virescens Nucleopolyhedrovirus, (I) + Heliothis punctigera Nucleopolyhedrovirus, (I) + Helicoverpa armigera Nucleopolyhedrovirus, (I) + Helicoverpa zea Nucleopolyhedrovirus, (I) + Spodoptera frugiperda Nucleopolyhedrovirus, (I) + Plutella xylostella Nucleopolyhedrovirus, (I) + Pasteuria nishizawae , (I) + p-cymene, (I) + pyflubumide, (I) + pyrafluprole, (I) + pyrethrum, (I) + QRD 420, (I) + QRD 452, (I) + QRD 460, (I) + Terpenoid blends, (I) + Terpenoids, (I) + tetraniliprole, (I) + α-terpinene, cyclaniliprole, cyhalodiamide, tioxazafen, fluopyram, fluazaindolizine, fluxametamide, brofanilide, afidopyropen, tyclopyrazoflor, flupyrim, benzpyrimoxan, etpyrafen, acynonapyr and flometoquin.

The weight ratio of spiropidion and another pesticidal active ingredient is generally between 1000:1 and 1:100, more preferably between 500:1 and 1:100, for example between 250:1 and 1:66, between 125:1 and 1:33, between 100:1 and 1:25, between 66:1 and 1:10, between 33:1 and 1:5, between 8:1 and 1:3, and between 2:1 to 1:2.

Examples of pests which may be controlled in accordance with the present invention include those:
from the order *Acarina,* for example, *Acalitus spp, Aculus spp, Acaricalus spp, Aceria spp, Acarus siro, Amblyomma spp., Argas spp., Boophilus spp., Brevipalpus spp., Bryobia spp, Calipitrimerus spp., Chorioptes spp., Dermanyssus gallinae, Dermatophagoides spp, Eotetranychus spp, Eriophyes spp., Hemitarsonemus spp, Hyalomma spp., Ixodes spp., Olygonychus spp, Ornithodoros spp., Polyphagotarsone latus, Panonychus spp., Phyllocoptruta oleivora, Phytonemus spp, Polypha-gotarsonemus spp, Psoroptes spp., Rhipicephalus spp., Rhizoglyphus spp., Sarcoptes spp., Steneotarsonemus spp, Tarsonemus spp.* and *Tetranychus spp.;*
from the order *Anoplura,* for example, *Haematopinus spp., Linognathus spp., Pediculus spp., Pemphigus spp.* and *Phylloxera spp.;*
from the order *Coleoptera,* for example, *Agriotes spp., Amphimallon majale, Anomala orientalis, Anthonomus spp., Aphodius spp, Astylus atromaculatus, Ataenius spp, Atomaria linearis, Chaetocnema tibialis, Cerotoma spp, Conoderus spp, Cosmopolites spp., Cotinis nitida, Curculio spp., Cyclocephala spp, Dermestes spp., Diabrotica spp., Diloboderus abderus, Epilachna spp., Eremnus spp., Heteronychus arator, Hypothenemus hampei, Lagria vilosa, Leptinotarsa decemLineata, Lissorhoptrus spp., Liogenys spp, Maecolaspis spp, Maladera castanea, Megascelis spp, Melighetes aeneus, Melolontha spp., Myochrous armatus, Orycaephilus spp., Otiorhynchus spp., Phyllophaga spp, Phlyctinus spp., Popillia spp., Psylliodes spp., Rhyssomatus aubtilis, Rhizopertha spp., Scarabeidae, Sitophilus spp., Sitotroga spp., Somaticus spp, Sphenophorus spp, Sternechus subsignatus, Tenebrio spp., Tribolium spp.* and *Trogoderma spp.;*
from the order *Diptera,* for example, *Aedes spp., Anopheles spp, Antherigona soccata,Bactrocea oleae, Bibio hortulanus, Bradysia spp, Calliphora erythrocephala, Ceratitis spp., Chrysomyia spp., Culex spp., Cuterebra spp., Dacus spp., Delia spp, Drosophila melanogaster, Fannia spp., Gastrophilus spp., Geomyza tripunctata, Glossina spp., Hypoderma spp., Hyppobosca spp., Liriomyza spp., Lucilia spp., Melanagromyza spp., Musca spp., Oestrus spp., Orseolia spp., Oscinella frit, Pegomyia hyoscyami, Phorbia spp., Rhagoletis spp, Rivelia quadrifasciata, Scatella spp, Sciara spp., Stomoxys spp., Tabanus spp., Tannia spp.* and *Tipula* spp.;
from the order *Hemiptera,* for example, *Acanthocoris scabrator, Acrosternum spp, Adelphocoris lineolatus, Amblypelta nitida, Bathycoelia thalassina, Blissus spp, Cimex spp., Clavigralla tomentosicollis, Creontiades spp, Distantiella theobroma, Dichelops furcatus, Dysdercus spp., Edessa spp, Euchistus spp., Eurydema pulchrum, Eurygaster spp., Halyomorpha halys, Horcias nobilellus, Lep-tocorisa spp., Lygus spp, Margarodes spp, Murgantia histrionic, Neomegalotomus spp, Nesidiocoris tenuis, Nezara spp., Nysius simulans, Oebalus insularis, Piesma spp., Piezodorus spp, Rhodnius spp., Sahlbergella singularis, Scaptocoris castanea, Scotinophara spp. , Thyanta spp , Triatoma spp.,* and *Vatiga illudens;*
from the order *Homoptera,* for example, *Acyrthosium pisum, Adalges spp, Agalliana ensigera, Agonoscena targionii, Aleurodicus spp, Aleurocanthus spp, Aleurolobus barodensis, Aleurothrixus floccosus, Aleyrodes brassicae, Amarasca biguttula, Amritodus atkinsoni, Aonidiella spp., Aonidiella auranti, Aphididae, Aphis spp., Aspidiotus spp., Aulacorthum solani, Bactericera cockerelli, Bemisia spp, Brachycaudus spp, Brevicoryne brassicae, Cacopsylla spp, Cavariella aegopodii Scop., Ceroplaster spp., Chrysomphalus aonidium, Chrysomphalus dictyospermi, Cicadella spp, Cofana spectra, Cryptomyzus spp, Cicadulina spp, Coccus hesperidum, Dalbulus maidis, Dialeurodes spp, Diaphorina citri, Diuraphis noxia, Dysaphis spp, Empoasca spp., Eriosoma larigerum, Erythroneura spp., Gascardia spp., Glycaspis brimblecombei, Hyadaphis pseudobrassicae, Hyalopterus spp, Hyperomyzus pallidus, Idioscopus clypealis, Jacobiasca lybica, Laodelphax spp., Lecanium corni, Lepidosaphes spp., Lopaphis erysimi, Lyogenys maidis, Macrosiphum spp., Mahanarva spp, Metcalfa pruinosa, Metopolophium dirhodum, Myndus crudus, Myzus spp., Neotoxoptera sp, Nephotettix spp., Nilaparvata spp., Nippolachnus piri Mats, Odonaspis ruthae, Oregma lanigera Zehnter, Parabemisia myricae, Paratrioza cockerelli, Parlatoria spp., Pemphigus spp., Peregrinus maidis, Perkinsiella spp, Phorodon humuli, Phylloxera spp, Planococcus spp., Pseudaulacaspis spp., Pseudococcus spp., Pseudatomoscelis seriatus, Psylla spp., Pulvinaria aethiopica, Quadraspidiotus spp., Quesada gigas, Recilia dorsalis, Rhopalosiphum spp., Saissetia spp., Scaphoideus spp., Schizaphis spp., Sitobion spp., Sogatella furcifera, Spissistilus festinus, Tarophagus Proserpina, Toxoptera spp, Trialeurodes spp, Tridiscus sporoboli, Trionymus spp, Trioza erytreae , Unaspis citri, Zygina flammigera,* and *Zyginidia scutellaris;*
from the order *Hymenoptera,* for example, *Acromyrmex, Arge spp, Atta spp., Cephus spp., Diprion spp., Diprionidae, Gilpinia polytoma, Hoplocampa spp., Lasius spp., Monomorium pharaonis, Neodiprion spp., Pogonomyrmex spp, Slenopsis invicta, Solenopsis spp. and Vespa spp.;*
from the order *Isoptera,* for example, *Coptotermes spp, Corniternes cumulans, Incisitermes spp, Macrotermes spp, Mastotermes spp, Microtermes spp, Reticulitermes spp.; Solenopsis geminate;*
from the order *Lepidoptera,* for example, *Acleris spp., Adoxophyes spp., Aegeria spp., Agrotis spp., Alabama argillaceae, Amylois spp., Anticarsia gemmatalis, Archips spp., Argyresthia spp, Argyrotaenia spp., Autographa spp., Bucculatrix thurberiella, Busseola fusca, Cadra cautella, Carposina nipponensis, Chilo spp., Choristoneura spp., Chrysoteuchia topiaria, Clysia ambiguella, Cnaphalocrocis spp., Cnephasia spp., Cochylis spp., Coleophora spp., Colias lesbia, Cosmophila flava, Crambus spp, Crocidolomia binotalis, Cryptophlebia leucotreta, Cydalima perspectalis, Cydia spp., Diaphania perspectalis, Diatraea spp., Diparopsis castanea, Earias spp., Eldana saccharina, Ephestia spp., Epinotia spp, Estigmene acrea, Etiella zinckinella, Eucosma spp., Eupoecilia ambiguella, Euproctis spp., Euxoa spp., Feltia jaculiferia, Grapholita spp., Hedya nubiferana, Heliothis spp., Hellula undalis, Herpetogramma spp, Hyphantria cunea, Keiferia lycopersicella, Lasmopalpus lignosellus, Leucoptera scitella, Lithocollethis spp., Lobesia botrana, Loxostege bifidalis, Lymantria spp., Lyonetia spp., Malacosoma spp., Mamestra brassicae, Manduca sexta, Mythimna spp, Noctua spp, Operophtera spp., Orniodes indica, Ostrinia nubilalis, Pammene spp., Pandemis spp., Panolis flammea, Papaipema nebris, Pectinophora gossypiela, Perileucoptera coffeella, Pseudaletia unipuncta, Phthorimaea operculella, Pieris rapae, Pieris spp., Plutella xylostella, Prays spp., Pseudoplusia spp, Rachiplusia nu, Richia albicosta, Scirpophaga spp., Sesamia spp., Sparganothis spp., Spodoptera spp., Sylepta derogate, Synanthedon spp., Thaumetopoea spp., Tortrix spp., Trichoplusia ni, Tuta absoluta,* and *Yponomeuta spp.;*
from the order *Mallophaga,* for example, *Damalinea spp. and Trichodectes spp.;*
from the order *Orthoptera,* for example, *Blatta spp., Blattella spp., Gryllotalpa spp., Leucophaea maderae, Locusta spp., Neocurtilla hexadactyla, Periplaneta spp. , Scapteriscus spp,* and *Schistocerca spp.;*
from the order *Psocoptera,* for example, *Liposcelis spp.;*
from the order *Siphonaptera,* for example, *Ceratophyllus spp., Ctenocephalides spp.* and *Xenopsylla cheopis;*
from the order *Thysanoptera,* for example, *Calliothrips phaseoli, Frankliniella spp., Heliothrips spp, Hercinothrips spp., Parthenothrips spp, Scirtothrips aurantii, Sericothrips variabilis, Taeniothrips spp., Thrips spp;* and/or
from the order *Thysanura,* for example, *Lepisma saccharina.*

Examples of soil-inhabiting pests, which can damage a crop in the early stages of plant development, are:
from the order *Lepidoptera,* for example, *Acleris spp., Aegeria spp., Agrotis spp., Alabama argillaceae, Amylois spp., Autographa spp., Busseola fusca, Cadra cautella, Chilo spp., Crocidolomia binotalis, Diatraea spp., Diparopsis castanea, Elasmopalpus spp., Heliothis spp., Mamestra brassicae, Phthorimaea operculella, Plutella xylostella, Scirpophaga spp., Sesamia spp., Spodoptera spp.* and *Tortrix spp.;*
from the order *Coleoptera,* for example, *Agriotes spp., Anthonomus spp., Atomaria linearis, Chaetocnema tibialis, Conotrachelus spp., Cosmopolites spp., Curculio spp., Dermestes spp., Diabrotica spp., Dilopoderus spp., Epilachna spp., Eremnus spp., Heteronychus spp., Lissorhoptrus spp., Melolontha spp., Orycaephilus spp., Otiorhynchus spp., Phlyctinus spp., Popillia spp., Psylliodes spp., Rhizopertha spp., Scarabeidae, Sitotroga spp., Somaticus spp., Tanymecus spp., Tenebrio spp., Tribolium spp., Trogoderma spp.* and *Zabrus spp.;*
from the order *Orthoptera,* for example, *Gryllotalpa spp.;*
from the order *Isoptera,* for example, *Reticulitermes spp.;*
from the order *Psocoptera,* for example, *Liposcelis spp.;*
from the order *Anoplura,* for example, *Haematopinus spp., Linognathus spp., Pediculus spp., Pemphigus spp.* and *Phylloxera spp.;*
from the order *Homoptera,* for example, *Eriosoma larigerum;*
from the order *Hymenoptera,* for example, *Acromyrmex, Atta spp., Cephus spp., Lasius spp., Monomorium pharaonis, Neodiprion spp., Solenopsis spp.* and *Vespa spp.;*
from the order *Diptera,* for example, *Tipula spp.;*
crucifer flea beetles (*Phyllotreta spp*.)*,* root maggots (*Delia spp.*)*,* cabbage seedpod weevil (*Ceutorhynchus spp.*) and aphids.

The use and method of the invention may be applied against insects from the order *Homoptera* (in particular, white flies, aphids, psyllids and armoured and soft scales), *Thysanoptera* (thrips), *Acarina* (mites) and *Lepidoptera* (butterflies and moths, and larva thereof). In particular, the use and method of the invention may be applied against a pest selected from *Tetranychus urticae* (red spider mite), *Bemisia tabaci* (whitefly), *Aphis gossypii* (aphids), *Thrips sp.* (thrips).

In practice, the agrochemical compositions used in accordance with the invention are applied as a formulation containing the various adjuvants and carriers known to or used in the industry.

These formulations can be in various physical forms, e.g. in the form of dusting powders, gels, wettable powders, water-dispersible granules, water-dispersible tablets, effervescent pellets, emulsifiable concentrates, microemulsifiable concentrates, oil-in-water emulsions, oil-flowables, aqueous dispersions, oily dispersions, suspo-emulsions, capsule suspensions, emulsifiable granules, soluble liquids, water-soluble concentrates (with water or a water-miscible organic solvent as carrier), impregnated polymer films or in other forms known e.g. from the Manual on Development and Use of FAO and WHO Specifications for Pesticides, United Nations, First Edition, Second Revision (2010). Such formulations are typically diluted prior to use. The dilutions can be made, for example, with water, liquid fertilisers, micronutrients, biological organisms, oil or solvents.

The formulations may be prepared by mixing the active ingredient with the formulation adjuvants in order to obtain formulations in the form of finely divided solids, granules, solutions, dispersions or emulsions. The active ingredient can also be formulated with other adjuvants, such as finely divided solids, mineral oils, oils of vegetable or animal origin, modified oils of vegetable or animal origin, organic solvents, water, surface-active substances or combinations thereof.

The formulation adjuvants that are suitable for the preparation of the formulations according to the invention are known *per se.* As liquid carriers there may be used: water, toluene, xylene, petroleum ether, vegetable oils, acetone, methyl ethyl ketone, cyclohexanone, acid anhydrides, acetonitrile, acetophenone, amyl acetate, 2-butanone, butylene carbonate, chlorobenzene, cyclohexane, cyclohexanol, alkyl esters of acetic acid, diacetone alcohol, 1,2-dichloropropane, diethanolamine, p-diethylbenzene, diethylene glycol, diethylene glycol abietate, diethylene glycol butyl ether, diethylene glycol ethyl ether, diethylene glycol methyl ether, *N,N*-dimethylformamide, dimethyl sulfoxide, 1,4-dioxane, dipropylene glycol, dipropylene glycol methyl ether, dipropylene glycol dibenzoate, diproxitol, alkylpyrrolidone, ethyl acetate, 2-ethylhexanol, ethylene carbonate, 1,1,1-trichloroethane, 2-heptanone, alpha-pinene, d-limonene, ethyl lactate, ethylene glycol, ethylene glycol butyl ether, ethylene glycol methyl ether, gamma-butyrolactone, glycerol, glycerol acetate, glycerol diacetate, glycerol triacetate, hexadecane, hexylene glycol, isoamyl acetate, isobornyl acetate, isooctane, isophorone, isopropylbenzene, isopropyl myristate, lactic acid, laurylamine, mesityl oxide, methoxypropanol, methyl isoamyl ketone, methyl isobutyl ketone, methyl laurate, methyl octanoate, methyl oleate, methylene chloride, m-xylene, *n*-hexane, *n*-octylamine, octadecanoic acid, octylamine acetate, oleic acid, oleylamine, o-xylene, phenol, polyethylene glycol, propionic acid, propyl lactate, propylene carbonate, propylene glycol, propylene glycol methyl ether, p-xylene, toluene, triethyl phosphate, triethylene glycol, xylenesulfonic acid, paraffin, mineral oil, trichloroethylene, perchloroethylene, ethyl acetate, amyl acetate, butyl acetate, propylene glycol methyl ether, diethylene glycol methyl ether, methanol, ethanol, isopropanol, and alcohols of higher molecular weight, such as amyl alcohol, tetrahydrofurfuryl alcohol, hexanol, octanol, ethylene glycol, propylene glycol, glycerol, N-methyl-2-pyrrolidone and the like.

Suitable solid carriers are, for example, talc, titanium dioxide, pyrophyllite clay, silica, attapulgite clay, kieselguhr, limestone, calcium carbonate, bentonite, calcium montmorillonite, cottonseed husks, wheat flour, soybean flour, pumice, wood flour, ground walnut shells, lignin and similar substances.

A large number of surface-active substances can advantageously be used in both solid and liquid formulations, especially in those formulations which can be diluted with a carrier prior to use. Surface-active substances may be anionic, cationic, non-ionic or polymeric and they can be used as emulsifiers, wetting agents or suspending agents or for other purposes. Typical surface-active substances include, for example, salts of alkyl sulfates, such as diethanolammonium lauryl sulfate; salts of alkylarylsulfonates, such as calcium dodecylbenzenesulfonate; alkylphenol/alkylene oxide addition products, such as nonylphenol ethoxylate; alcohol/alkylene oxide addition products, such as tridecylalcohol ethoxylate; soaps, such as sodium stearate; salts of alkylnaphthalenesulfonates, such as sodium dibutylnaphthalenesulfonate; dialkyl esters of sulfosuccinate salts, such as sodium di(2-ethylhexyl)sulfosuccinate; sorbitol esters, such as sorbitol oleate; quaternary amines, such as lauryltrimethylammonium chloride, polyethylene glycol esters of fatty acids, such as polyethylene glycol stearate; block copolymers of ethylene oxide and propylene oxide; and salts of mono- and di-alkylphosphate esters; and also further substances described e.g. in McCutcheon's Detergents and Emulsifiers Annual, MC Publishing Corp., Ridgewood New Jersey (1981).

Further adjuvants that can be used in pesticidal formulations include crystallisation inhibitors, viscosity modifiers, suspending agents, dyes, anti-oxidants, foaming agents, light absorbers, mixing auxiliaries, antifoams, complexing agents, neutralising or pH-modifying substances and buffers, corrosion inhibitors, fragrances, wetting agents, take-up enhancers, micronutrients, plasticisers, glidants, lubricants, dispersants, thickeners, antifreezes, microbicides, and liquid and solid fertilisers.

The formulations/compositions used according to the invention can include an additive comprising an oil of vegetable or animal origin, a mineral oil, alkyl esters of such oils or mixtures of such oils and oil derivatives. The amount of oil additive in the formulations according to the invention is generally from 0.01 to 10 %, based on the mixture to be applied. For example, the oil additive can be added to a spray tank in the desired concentration after a spray mixture has been prepared. Preferred oil additives comprise mineral oils or an oil of vegetable origin, for example rapeseed oil, olive oil or sunflower oil, emulsified vegetable oil, alkyl esters of oils of vegetable origin, for example the methyl derivatives, or an oil of animal origin, such as fish oil or beef tallow. Preferred oil additives comprise alkyl esters of C₈-C₂₂ fatty acids, especially the methyl derivatives of C₁₂-C₁₈ fatty acids, for example the methyl esters of lauric acid, palmitic acid and oleic acid (methyl laurate, methyl palmitate and methyl oleate, respectively). Many oil derivatives are known from the Compendium of Herbicide Adjuvants, 10th Edition, Southern Illinois University, 2010.

Preferred formulations can have the following compositions (weight %):
Emulsifiable concentrates:

| | |
|---|---|
| active ingredient: | 1 to 95 %, preferably 60 to 90 % |
| surface-active agent: | 1 to 30 %, preferably 5 to 20 % |
| liquid carrier: | 1 to 80 %, preferably 1 to 35 % |

Dusts:

| | |
|---|---|
| active ingredient: | 0.1 to 10 %, preferably 0.1 to 5 % |
| solid carrier: | 99.9 to 90 %, preferably 99.9 to 99 % |

Suspension concentrates:

| | |
|---|---|
| active ingredient: | 5 to 75 %, preferably 10 to 50 % |
| water: | 94 to 24 %, preferably 88 to 30 % |
| surface-active agent: | 1 to 40 %, preferably 2 to 30 % |

Wettable powders:

| | |
|---|---|
| active ingredient: | 0.5 to 90 %, preferably 1 to 80 % |
| surface-active agent: | 0.5 to 20 %, preferably 1 to 15 % |
| solid carrier: | 5 to 95 %, preferably 15 to 90 % |

Granules:

| | |
|---|---|
| active ingredient: | 0.1 to 30 %, preferably 0.1 to 15 % |
| solid carrier: | 99.5 to 70 %, preferably 97 to 85 % |

Suitably, the agrochemical compositions and formulations used according to the present invention are applied prior to disease development. Rates and frequency of use of the formulations are those conventionally used in the art and will depend on the risk of infestation by the insect pest.

The Examples which follow serve to illustrate the invention.

### EXAMPLES:

### Example 1:

In a greenhouse at 20 °C, tomato plants (*Solanum lycopersicum* Ailsa Craig at BBCH 12 growth stage) grown in 50% Jip 3 and 50% peat in 5" pots were drenched (in five replicates) with 50 mL of a 100 ppm aqueous active ingredient solution (5 mg of active ingredient per plant) prepared from dilution of (i) a spiropidion SC300 formulation (SC = suspension concentrate), and (ii) commercially-available spirotetramat as a SC240 formulation. At four intervals post-treatment (1, 7, 14 and 21 days), tomato plants subjected to treatments (i) and (ii) were sectioned into roots, stem and separate leaf segments, washed and extracted with the quantification by liquid chromatography/mass spectrometry (LC/MS) of amounts (µg) of spiropidion and its dione (cide), and spirotetramat and its dione (cide). The results are shown in Table 1 below.

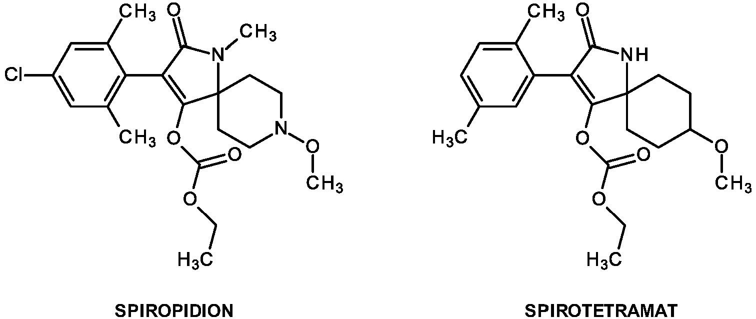

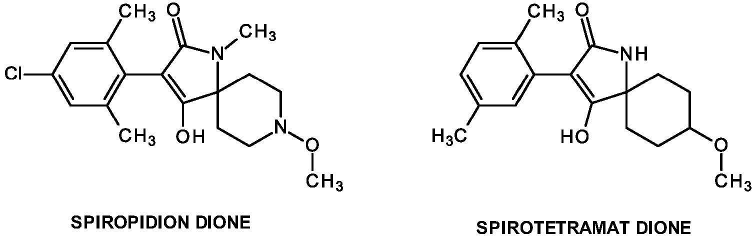

**Table 1:**

| **Days post-treatment** | **Recovered amount (µg) - SPIROPIDION + SPIROPIDION DIONE** | **Recovered amount (µg) - SPIROTETRAMAT + SPIROTETRAMAT DIONE** |
|---|---|---|
| **1** | 2 | 1 |
| **7** | 7 | 4.5 |
| **14** | 34 | 9 |
| **21** | 24 | 4.5 |

As indicated by the data shown in Table 1, although spiropidion and spirotetramat after application become systemic in a plant (likewise for their respective diones), this assay shows that spiropidion had a much greater rate of uptake from the soil when compared to spirotetramat when applied as a root drench to the soil of a tomato plant. This demonstrates the desirable and unexpected potential for lower rate applications of spiropidion applied as a soil drench than for a corresponding treatment with spirotetramat.

### Example 2 (Test no. 20 according to the invention):

To the soil at the base of vegetable plants naturally infested with a population of a selected pest (refer Table 2) was applied by drench 30 to 100 mL per plant of an active ingredient (ai) solution at a dose rate of 10 mg ai/plant, wherein the solutions consisted of spiropidion or spirotetramat as active ingredient. Soil application was made 3 to 7 days after transplant in a nursery tray. Spiropidion was applied as a dilution of an SC300 formulation in water. Spirotetramat was applied as a dilution of an SC240 formulation in water. Mortality rates were recorded as a percentage against an untreated check plant and were evaluated at between 5 and 40 days after soil application. The results are shown in Table 2 below.

**Table 2:**

| **Test no.** | **Crop plant** | **Pest** | **% Mortality rate against untreated plant (spiropidion)** | **% Mortality rate against untreated plant (spirotetramat)** | **Active ingredient (ai) dose rate** |
|---|---|---|---|---|---|
| 1 | Eggplant | *Tetranychus urticae* | 82 | 62 | 10 mg ai/plant |
| 2 | Eggplant | *Tetranychus urticae* | 88 | 85 | 10 mg ai/plant |
| 3 | Eggplant | *Bemisia tabaci* | 93 | 68 | 10 mg ai/plant |
| 4 | Eggplant | *Bemisia tabaci* | 97 | 93 | 10 mg ai/plant |
| 5 | Eggplant | *Bemisia tabaci* | 93 | 76 | 10 mg ai/plant |
| 6 | Eggplant | *Bemisia tabaci* | 95 | 91 | 10 mg ai/plant |
| 7 | Eggplant | *Bemisia tabaci* | 98 | 96 | 10 mg ai/plant |
| 8 | Eggplant | *Aphis gossypii* | 87 | 71 | 10 mg ai/plant |
| 9 | Cucumber | *Thrips sp.* | 92 | 90 | 10 mg ai/plant |
| 10 | Cucumber | *Aphis gossypii* | 94 | 87 | 10 mg ai/plant |
| 11 | Melon | *Thrips sp.* | 90 | 70 | 10 mg ai/plant |
| 12 | Melon | *Thrips sp.* | 91 | 90 | 10 mg ai/plant |
| 13 | Melon | *Thrip sp.* | 64 | 64 | 10 mg ai/plant |
| 14 | Melon | *Bemisia tabaci* | 80 | 64 | 10 mg ai/plant |
| 15 | Melon | *Aphis gossypii* | 87 | 63 | 10 mg ai/plant |
| 16 | Squash | *Bemisia tabaci* | 96 | 83 | 10 mg ai/plant |
| 17 | Squash | *Bemisia tabaci* | 58 | 42 | 10 mg ai/plant |
| 18 | Squash | *Aphis gossypii* | 99 | 93 | 10 mg ai/plant |
| 19 | Squash | *Aphis gossypii* | 91 | 84 | 10 mg ai/plant |
| 20 | Tomato | *Bemisia tabaci* | 94 | 84 | 10 mg ai/plant |
| 21 | Hot pepper | *Tetranychus urticae* | 83 | 45 | 10 mg ai/plant |
| 22 | Hot pepper | *Thrips sp.* | 66 | 46 | 10 mg ai/plant |
| 23 | Sweet pepper | *Thrips sp.* | 72 | 53 | 10 mg ai/plant |

As shown in Table 2 for soil treatments of spiropidion and spirotetramat at the same dose rate for a range of vegetable crops and pests, mortality rates (and thus pest control) for selected pests with the use of spiropidion were consistently higher than for the use of spirotetramat. Test no. 20 is according to the claimed invention, test no.s 1-19 and 21-23 are reference examples.

### Example 3 (not according to the invention):

To the soil surface at the base of separate coffee plants naturally infested with a population of coffee leaf miner (*Perileucoptera coffeella*) was applied as a drench 50 to 100 mL of an active ingredient (ai) solution at a dose rate of 390 mg ai/plant, wherein the active ingredient was spiropidion, or thiamethoxam as a commercial standard. Spiropidion was applied as a dilution of an SC300 formulation in water. Thiamethoxam was applied as a dilution of a WG25 formulation in water. Mortality rates were recorded as a pest control percentage against an untreated check plant and were evaluated at between 30 and 95 days after soil application of the respective active ingredients. The results are shown in Table 3 below.

**Table 3:**

| **Test no.** | **Crop plant** | **Pest** | **% Mortality rate (spiropidion)** | **% Mortality rate (thiamethoxam)** | **Active ingredient (ai) dose rate** |
|---|---|---|---|---|---|
| 1 | Coffee | *Perileucoptera coffeella* | 48 | 39 | 390 mg ai/plant |
| 2 | Coffee | *Perileucoptera coffeella* | 71 | 68 | 390 mg ai/plant |
| 3 | Coffee | *Perileucoptera coffeella* | 91 | 81 | 390 mg ai/plant |
| 4 | Coffee | *Perileucoptera coffeella* | 69 | 73 | 390 mg ai/plant |
| 5 | Coffee | *Perileucoptera coffeella* | 62 | 38 | 390 mg ai/plant |

As shown in Table 3 for soil treatments of spiropidion and thiamethoxam at the same dose rate for a coffee plant, mortality rates (and thus pest control) for *Perileucoptera coffeella* for the use of spiropidion were consistently higher than for the use of thiamethoxam as a commercial standard.

## Claims

1. Use of an active ingredient compound of Formula (I): 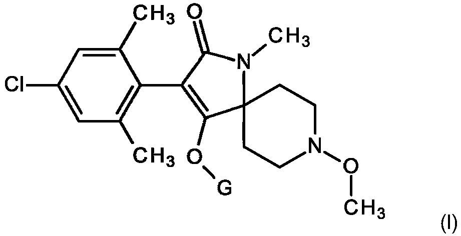 wherein G is -C(O)OC₂H₅, for controlling a pest by applying the active ingredient to the growth substrate of a crop of a useful plant, wherein the plant is a tomato plant.

2. The use according to claim 1, wherein the growth substrate is soil.

3. The use to according to claim 2, wherein the application is by drip, drenching or injection of the active ingredient to the soil.

4. The use according to claim 2 or claim 3, wherein the application is by drenching of the active ingredient compound into the soil.

5. The use according to any one of claims 1 to 4, wherein the active ingredient compound is applied as a liquid composition further comprising one or more agrochemically-acceptable diluents or carriers.

6. The use according to claim 5, wherein the composition comprises an adjuvant, preferably an adjuvant selected from a mineral oil, a vegetable oil or a trans-esterified vegetable oil.

7. The use according to claim 5 or claim 6, wherein the composition comprises 20 to 60 grams of spiropidion per 100 L, and preferably 30 to 45 grams of spiropidion per 100 L.

8. The use according to any one of claims 1 to 7, wherein the pest is selected from the order *Homoptera, Thysanoptera, Acarina* or *Lepidoptera.*

9. The use according to any one of claims 1 to 8, wherein the pest is selected from white flies, aphids, psyllids, armoured and soft scales, thrips, mites or leaf miners.

10. A method of controlling pests, which method comprises applying to the growth substrate of a crop of a useful plant an active ingredient compound of Formula (I): 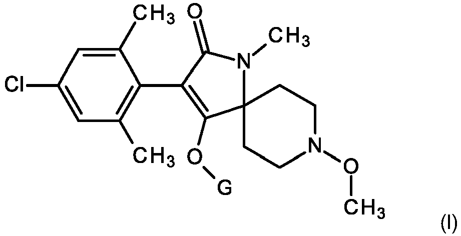 wherein G is -C(O)OC₂H₅, wherein the useful plant is a tomato plant.

## Patentansprüche

1. Verwendung einer Wirkstoffverbindung der Formel (I) : 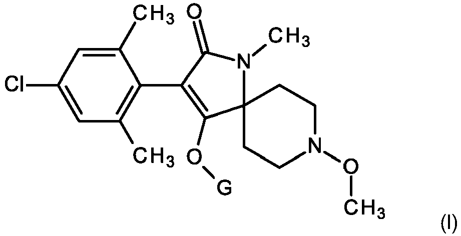 wobei G für -C(O)OC₂H₅ steht, zur Bekämpfung eines Schädlings durch Ausbringen des Wirkstoffs auf das Wachstumssubstrat einer Nutzpflanzenkultur, wobei die Pflanze eine Tomatenpflanze ist.

2. Verwendung nach Anspruch 1, wobei das Wachstumssubstrat Boden ist.

3. Verwendung nach Anspruch 2, wobei das Ausbringen durch Auftropfen auf den Boden, Tränken des Bodens oder Injektion des Wirkstoffs in den Boden erfolgt.

4. Verwendung nach Anspruch 2 oder Anspruch 3, wobei das Ausbringen durch Tränken des Bodens mit der Wirkstoffverbindung erfolgt.

5. Verwendung nach einem der Ansprüche 1 bis 4, wobei die Wirkstoffverbindung als eine flüssige Zusammensetzung ausgebracht wird, die weiterhin ein oder mehrere agrochemisch verträgliche Verdünnungsmittel oder Träger umfasst.

6. Verwendung nach Anspruch 5, wobei die Zusammensetzung ein Adjuvans, vorzugsweise ein aus einem Mineralöl, einem Pflanzenöl oder einem trans-veresterten Pflanzenöl ausgewähltes Adjuvans, umfasst.

7. Verwendung nach Anspruch 5 oder Anspruch 6, wobei die Zusammensetzung 20 bis 60 Gramm Spiropidion pro 100 l und vorzugsweise 30 bis 45 Gramm Spiropidion pro 100 1 umfasst.

8. Verwendung nach einem der Ansprüche 1 bis 7, wobei der Schädling aus der Ordnung Homoptera, Thysanoptera, Acarina oder Lepidoptera ausgewählt ist.

9. Verwendung nach einem der Ansprüche 1 bis 8, wobei der Schädling aus Weißen Fliegen, Blattläusen, Blattflöhen, Deckel- und Napfschildläusen, Thripsen, Milben oder Minierfliegen ausgewählt ist.

10. Verfahren zur Bekämpfung von Schädlingen, wobei das Verfahren das Ausbringen einer Wirkstoffverbindung der Formel (I) auf das Wachstumssubstrat einer Nutzpflanzenkultur umfasst: 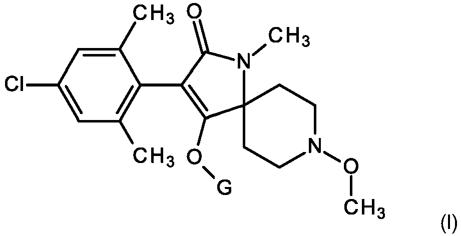 wobei G für -C(O)OC₂H₅ steht, wobei die Nutzpflanze eine Tomatenpflanze ist.

## Revendications

1. Utilisation d'un composé d'ingrédient actif de Formule (I) : 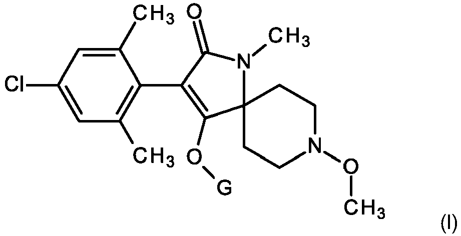 dans laquelle G est -C(O)OC₂H₅, pour la lutte contre un organisme nuisible par application de l'ingrédient actif sur le substrat de croissance d'une culture d'une plante utile, dans laquelle la plante est une plante de tomate.

2. Utilisation selon la revendication 1, dans laquelle le substrat de croissance est un sol.

3. Utilisation selon la revendication 2, dans laquelle l'application se fait par goutte-à-goutte, trempage ou injection de l'ingrédient actif dans le sol.

4. Utilisation selon la revendication 2 ou la revendication 3, dans laquelle l'application se fait par trempage du composé d'ingrédient actif dans le sol.

5. Utilisation selon l'une quelconque des revendications 1 à 4, dans laquelle le composé d'ingrédient actif est appliqué sous la forme d'une composition liquide comprenant en outre un ou plusieurs diluants ou supports acceptables sur le plan agrochimique.

6. Utilisation selon la revendication 5, dans laquelle la composition comprend un adjuvant, de préférence un adjuvant choisi parmi une huile minérale, une huile végétale ou une huile végétale transestérifiée.

7. Utilisation selon la revendication 5 ou la revendication 6, dans laquelle la composition comprend 20 à 60 grammes de spiropidion pour 100 L, et de préférence 30 à 45 grammes de spiropidion pour 100 L.

8. Utilisation selon l'une quelconque des revendications 1 à 7, dans laquelle l'organisme nuisible est choisi dans l'ordre des *Homoptères,* des *Thysanoptères,* des *Acariens* ou des *Lépidoptères.*

9. Utilisation selon l'une quelconque des revendications 1 à 8, dans laquelle l'organisme nuisible est choisi parmi les aleurodes, les pucerons, les psylles, les cochenilles à bouclier et molles, les thrips, les acariens ou les mineuses des feuilles.

10. Procédé de lutte contre des organismes nuisibles, ledit procédé comprenant l'application, sur le substrat de croissance d'une culture d'une plante utile, d'un composé d'ingrédient actif de Formule (I) : 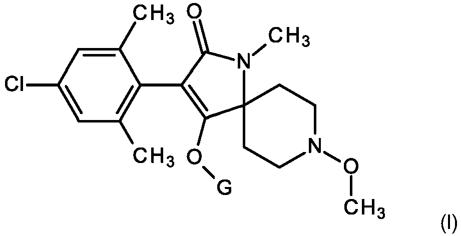 dans lequel G est -C(O)OC₂H₅, dans lequel la plante utile est une plante de tomate.
